Europäisches Patentamt

European Patent Office

Office européen des brevets

(19)

(11) **EP 0 664 652 B1**

(12) **FASCICULE DE BREVET EUROPEEN**

(45) Date de publication et mention
de la délivrance du brevet:
**15.09.1999 Bulletin 1999/37**

(51) Int Cl.6: **H04N 7/26**

(21) Numéro de dépôt: **95400069.1**

(22) Date de dépôt: **13.01.1995**

(54) **Procédé et dispositif d'analyse et de synthèse en sous bandes adaptatifs**

Verfahren und Vorrichtung zur adaptiven Subband-Analyse und -Synthese

Method and apparatus for adaptive subband analysis and synthesis

(84) Etats contractants désignés:
**DE GB IT NL**

(30) Priorité: **21.01.1994 FR 9400633**

(43) Date de publication de la demande:
**26.07.1995 Bulletin 1995/30**

(73) Titulaire: **THOMSON multimedia**
**92648 Boulogne Cédex (FR)**

(72) Inventeurs:
• **Perdrieau, Laurent, Thomson-CSF, SCPI**
**F-92402 Courbevoie Cedex (FR)**
• **Pecot, Michel, Thomson-CSF, SCPI**
**F-92402 Courbevoie Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**FR-A- 2 643 531       FR-A- 2 654 887**
**US-A- 4 969 040**

• **1993 IEEE INTERNATIONAL SYMPOSIUM ON CIRCUITS AND SYSTEMS, 3 Mai 1993, CHICAGO pages 60 - 63 PETRAGLIA ET AL. 'Performance Analysis of Adaptive Filter Structures Based on Subband Decomposition'**

## Description

La présente invention concerne un procédé et un dispositif d'analyse et de synthèse en sous bandes adaptatif.

Elle s'applique à la réalisation de systèmes de transmission et de réception de signaux vidéos numériques et notamment aux systèmes de codage et décodage compatibles d'images de télévision.

Il est connu pour assurer la compatibilité des différents standards des signaux de télévision de procéder à un découpage hiérarchique de ceux-ci en sous bandes. Des dispositifs correspondants sont par exemple connus des demandes de brevet français FR-A-2 643 531 et FR-A-2 654 887 déposées au nom de la Demanderesse. La décomposition du spectre bi-dimensionnel de l'image est obtenue à l'aide d'une décomposition séparable arborescente obtenue à l'aide de filtres demi-bandes, passe-bas et passe-haut, couplés respectivement à des dispositifs de sous échantillonnage décimateurs par deux. Les filtres utilisés pour la décomposition sont déterminés a priori et sont identiques pour tous les niveaux de l'arbre de décomposition. L'arbre est choisi de façon à assurer une blancheur suffisante grâce à une découpe suffisamment profonde. Toutefois, la propagation des erreurs est d'autant plus importante que cette découpe est profonde. Du fait que les filtres sont calculés de manière à décomposer le signal en deux bandes de largeur identique tout en minimisant l'énergie dans la bande coupée, la fréquence de coupure étant à $\pi/2$, un banc de filtrage en sous bandes ainsi constitué conduit à un comportement moyen vis à vis de l'ensemble des signaux à filtrer, du point de vue de la décorrélation des signaux sous bandes.

Le but de l'invention est de pallier les inconvénients précités.

A cet effet, l'invention a pour objet un procédé d'analyse et de synthèse en sous bandes adaptatif pour codeur et décodeur d'images reliés par un canal de transmission du type consistant au niveau des filtres d'analyse à découper le signal à transmettre sur le canal de transmission en sous bandes suivant une structure arborescente par filtrage et décimation caractérisé en ce qu'il consiste à effectuer dans les filtres d'analyse un filtrage adaptatif local dans chaque sous bande, prenant en compte le voisinage d'un point courant de l'image.

D'autres caractéristiques et avantages de l'invention apparaîtront dans la description qui suit faite en regard des figures des dessins annexés qui représentent:

- La figure 1 un banc d'analyse hiérarchique en sous bandes selon l'art antérieur.
- La figure 2 une structure de banc de filtres en treillis.
- La figure 3 une mise en oeuvre d'un dispositif pour la commutation de filtres d'analyse et de synthèse d'un signal décomposé en sous bandes.
- La figure 4 une organisation de filtres de synthèse permettant de conserver la propriété de reconstruction parfaite des filtres de synthèse lors d'une commutation de filtres.
- La figure 5 un mode de fonctionnement d'un banc de synthèse adaptatif.
- La figure 6 le principe de mise en oeuvre d'un banc d'analyse adaptatif.
- La figure 7 un mode de positionnement d'un masque d'estimation.
- La figure 8 un mode de réalisation d'un codeur à 4 bandes adaptatif selon l'invention.
- La figure 9 un mode de traitement des bords et d'initialisation des filtres.

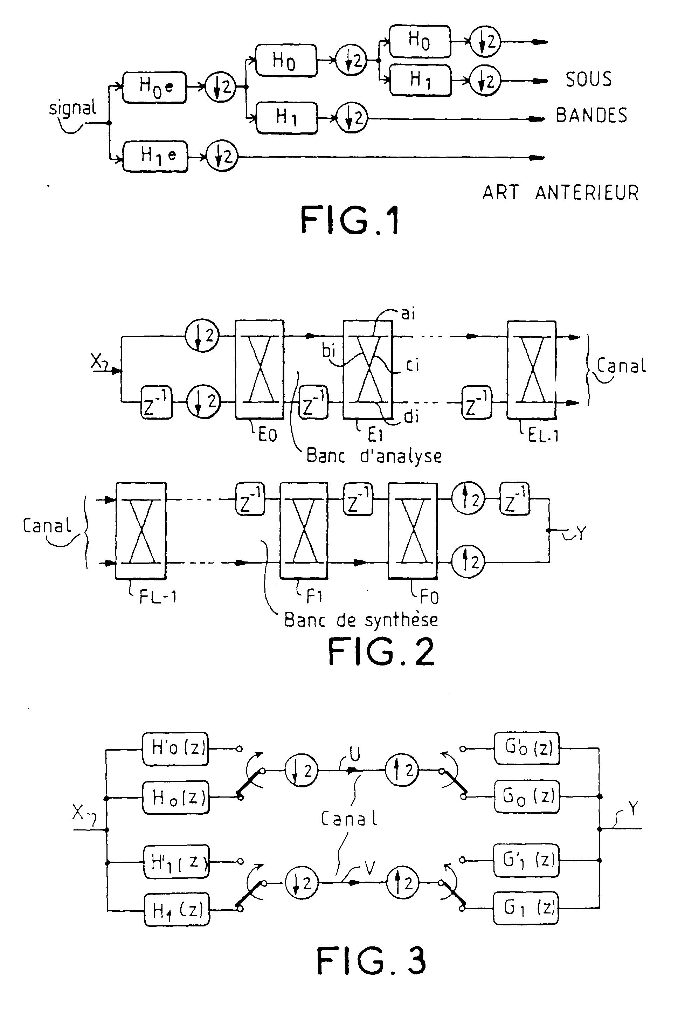

Le filtrage en sous bande fait partie des techniques de décorrélation dite par transformée. Un banc de décomposition en sous bandes est constitué, d'une partie analyse qui effectue une décomposition du signal et d'une partie synthèse qui reconstruit le signal à partir des sous bandes. La décomposition d'un signal en M bandes peut être réalisée soit par un ensemble de filtres montés en parallèle, soit par la mise en cascade de cellules de décomposition à peu de bandes comportant typiquement deux bandes. Dans ce dernier cas, la décomposition hiérarchique du signal est structurée de la manière représentée à la figure 1. La structure arborescente correspondante est formée de cellules d'analyse synthèse à deux bandes encore appelées cellules de décomposition en octaves. Chaque cellule est formée d'un couple de filtres notés $H_0$ et $H_1$. Pour conserver un débit global constant, les signaux en sortie des cellules d'analyse sont sous-échantillonnés avec un taux critique $R = 2$. Les signaux appliqués aux entrées des cellules de synthèse correspondantes, non représentées sont sur-échantillonnés par deux. Une telle structure permet dans le cas de filtrage d'images dont les signaux correspondants sont par nature non stationnaires, d'obtenir un gain appréciable en terme de décorrélation et par suite en termes de codage, si le système d'analyse synthèse a la possibilité de s'adapter aux caractéristiques locales des images. Pour ce type de structure deux possibilités sont à envisager, elles consistent, soit à adapter l'arbre de décomposition, soit à adapter les filtres, l'une n'étant pas exclusive de l'autre. Plutôt que d'adapter l'analyse au signal pour déterminer l'arborescence de décomposition la mieux adaptée au signal pour une paire de filtres $H_0$ et $H_1$ déterminée a priori, l'idée de l'invention consiste en une approche complémentaire qui consiste en la détermination d'un procédé d'adaptation des filtres vis à vis des propriétés statistiques du signal d'entrée. Elle concerne plus particulièrement le cas du filtrage d'image par des bancs de décomposition hiérarchique en octave utilisant des filtres séparables. L'utilisation de filtres séparables, où le filtrage est indépendant sur les lignes et les colonnes de l'image, permet de ramener les traitements au cas de signaux monodimensionnels. De plus, seuls les bancs de décomposition assurant la reconstruction parfaite du signal en l'absence de quantification des signaux sous bandes sont à considérer. Deux catégories de filtres permettent d'obtenir ces résultats, ces filtres étant connus sous l'abréviation anglo-saxonne CQF (Conjugated Quadrature Filter) et sous l'appellation de filtres à phase linéaires bi-orthogonaux. Dans les filtres CQF les filtres de fonction de transfert $H_0$ et $H_1$ sont des versions retournées l'une de l'autre. Au sein d'une décomposition dyadique, ils correspondent à des ondelettes orthogonales. Parmi les filtres à phase linéaire bi-orthogonaux deux solutions sont également réalisables selon la parité de l'ordre et la symétrie des filtres $H_0$ et $H_1$. Ces filtres sont connus, d'une part, sous l'abréviation anglo-saxonne SSEE de "Symetric-Symetric-Even-Even" et ont la propriété d'utiliser des filtres $H_0$ et $H_1$ symétriques et d'ordre pair et d'autre part, sous l'abréviation anglo-saxonne SAOO de "Symetric-Antisymetric-Odd-Odd" où les filtres $H_0$ et $H_1$ sont respectivement symétriques et anti-symétriques d'ordre impair. Les filtres de type SSEE imposent aux filtres $H_0$ et $H_1$ d'être de longueurs différentes. Dans les modes de réalisation de l'invention décrits ci-après seuls les filtres de type CQF et SAOO sont considérés. Les catégories de filtres retenus existent sous une forme transverse et également sous une forme treillis. Les filtres en treillis assurent la reconstruction parfaite du signal indépendamment des valeurs des coefficients. Une structure en treillis généralisée, telle que celle qui est représentée à la figure 2, intègre les deux cas de filtres CQF et SAOO. Sur la figure 2 chaque cellule du treillis du filtre d'analyse $E_i$ est paramétrée par quatre coefficients $a_i$, $b_i$, $c_i$ et $d_i$ formant la matrice de transfert de la cellule. Cette matrice de transfert $E_i$ est représentable sous la forme

$$E_i = \begin{pmatrix} a_i & c_i \\ b_i & d_i \end{pmatrix} \qquad (1)$$

Afin d'éviter une dégénérescence des cellules en treillis il est nécessaire d'imposer que le déterminant de la matrice $E_i$ soit différent de zéro. Pour une facilité de calcul sa valeur est imposée égale à 1. Les treillis de type CQF sont obtenus à partir du treillis généralisé en imposant aux coefficients des cellules $E_i$ de satisfaire les relations $a_i = d_i$ et $b_i = -c_i$. De la même manière, les treillis SAOO imposent aux coefficients des cellules $E_i$, les relations $a_i = d_i$ et $b_i = c_i$ ainsi que, l'ajout d'une cellule terminale en sortie des filtres dont la matrice de transfert est définie par la relation :

$$T_{SAOO} = \begin{pmatrix} 1 & 1 \\ 1 & -1 \end{pmatrix} \qquad (2)$$

Dans une optique de compression d'images et de codage compatible de signaux de télévision, les filtres sont optimisés selon un critère qui fait intervenir le coût de codage. Ce dernier, pour deux signaux indépendants de valeur moyenne nulle, est proportionnel au produit des variances des deux signaux. Le critère d'optimisation qui est retenu pour la mise en oeuvre de l'invention est de la forme

$$C(H_0, H_1) = \mu_1 . R_{00}(0) . R_{11}(0) + \mu_2 . \frac{1}{2M_1 + 1} \sum_{\ell = -M_1}^{M_1} R_{01}^2(\ell) +$$

$$\mu_3 . \frac{1}{M_2} \sum_{\ell = 1}^{M_2} \left[ R_{00}^2(\ell) + R_{11}^2(\ell) \right] \qquad (3)$$

où $R_{ij}(\ell)$ représente l'intercorrélation de retard $\ell$ entre les signaux i et j en sortie des filtres $H_0$ et $H_1$ et après sous-échantillonnage. Les coefficients $\mu_1$, $\mu_2$ et $\mu_3$ permettent de moduler la contribution de chacun des termes. Le premier terme tend à minimiser le coût de codage sous une hypothèse d'indépendance et de blancheur des signaux sous bandes. Le second terme cherche à rendre les deux signaux sous bandes indépendants, pour une décorrélation inter-bandes, et le troisième terme contribue au blanchiment des signaux pour une décorrélation intra-bande (par analogie au spectre d'un bruit blanc).

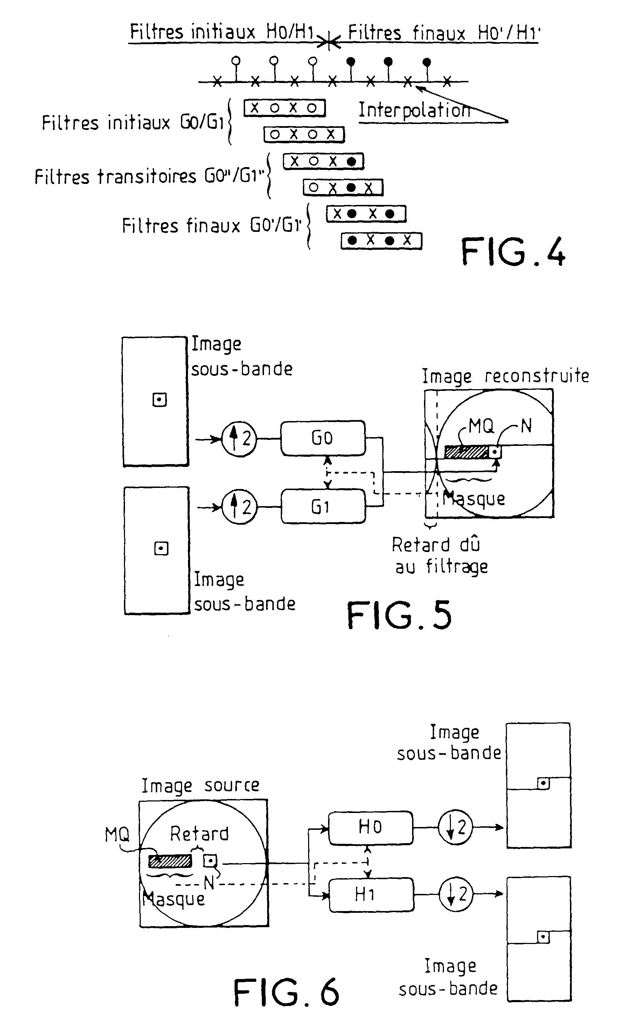

Afin d'éviter une recherche d'optimisation des filtres de décomposition d'un banc de filtrage en sous bandes à partir des statistiques globales du signal, conduisant à des résultats moyens du fait du caractère non stationnaire des images, le procédé selon l'invention consiste à adapter les filtres aux caractéristiques locales de l'image. Ceci impose que les filtres d'analyse soient modifiés au cours du filtrage en fonction des statistiques mesurées dans le voisinage de chaque point courant. Comme par ailleurs le banc de filtrage doit continuer d'assurer la reconstruction parfaite du signal en l'absence de quantification, le problème de la reconstruction parfaite au niveau de la synthèse est résolu en faisant intervenir une dimension supplémentaire qui est le temps. En effet, lorsque les filtres d'analyse sont modifiés, il apparaît une phase transitoire où les échantillons issus de l'ancien et du nouveau filtre sont convolués à la synthèse. Comme le montre le banc de filtre de la figure 3 représenté, un banc de filtrage en deux bandes, dans lesquelles deux jeux de filtres d'analyse $[H_0(z), H_1(z)]$ et $[H_0'(z), H_1'(z)]$ ainsi que deux jeux de filtres de synthèse supplémentaires, $[G_0(z), G_1(z)]$ et $[G_0'(z), G_1'(z)]$, peuvent être commutés. En présence de filtres de longueur 4 le problème est résolu comme le montre la figure 4 en utilisant un jeu de filtres de synthèse $[G_0''(z), G_1''z)]$ durant la phase transitoire. Pour simplifier la représentation de la figure 4, les filtres ont été représentés avec une longueur de 4. Le nombre de filtres transitoires est donné par la relation (N/2-1) où N est la longueur des filtres.

Hors de la phase de transition, les filtres d'analyse et de synthèse sont liés par la relation classique :

$$\begin{cases} G_0(z) = 2\,H_1(-z) \\ G_1(z) = -\,2\,H_0(-z) \end{cases} \qquad (4)$$

Lorsque les filtres sont implantés sous la forme de treillis, le problème de la commutation des filtres se résout directement. Il suffit pour cela d'observer le mécanisme de la propagation de l'information à travers la structure du treillis. Dans ce cas, les coefficients des cellules peuvent être modifiés de manière quelconque à l'analyse sous réserve que cette modification soit répercutée à la synthèse à un instant approprié. La reconstruction parfaite est alors toujours assurée dès lors que le produit matriciel

$$E_i \times F_i = I \qquad\qquad (5)$$

est respecté

où $E_i$ et $F_i$ représentent respectivement les matrices de transfert des filtres d'analyse et de synthèse et I la matrice identité.

Plus précisément, si les coefficients de chaque cellule $E_i$ sont modifiés à un instant n, ce temps étant compté après sous-échantillonnage, la propriété de reconstruction parfaite est conservée à condition que les coefficients de la cellule de synthèse correspondante $F_i$ soient mis à jour à l'instant n+L-1-i, L représentant le nombre total de cellules du treillis. Le retard est apporté par les cellules du treillis situées entre $E_i$ et $F_i$.

L'optimisation du critère dans le cas des filtres de type CQF est réalisée par l'algorithme connu de Newton. La convergence peut être améliorée en modifiant l'algorithme par la méthode de Levenberg-Marquardt. L'optimisation dans le cas des treillis de type SAOO et du treillis généralisé est réalisée sous contrainte et elle est confiée à l'algorithme de Lagrange-Newton. Les matrices de corrélation des signaux nécessaires au calcul sont obtenues par récurrence sur l'ordre du treillis et peuvent être exprimées en fonction des signaux à l'entrée de chaque cellule de filtrage à optimiser.

L'algorithme de Newton nécessite une bonne initialisation des filtres. Celle-ci est donnée au départ par un jeu de filtres déterminés a priori utilisés dans une décomposition en sous bandes classique. En cours de filtrage, le couple de filtres calculés pour le point précédent sert d'initialisation de l'algorithme pour le calcul du point courant. Ceci permet, d'assurer une convergence plus rapide de l'algorithme et d'obtenir des coefficients de filtres qui minimisent le critère selon la relation (3) décrite précédemment. Du fait que, les filtres d'analyse peuvent être modifiés à chaque point après sous échantillonnage de l'image à l'entrée de la cellule de filtre à optimiser, et que la transmission vers le décodeur des coefficients des filtres d'analyse indispensables au calcul des filtres de synthèse entraînerait un surcoût prohibitif, le procédé selon l'invention met en oeuvre une technique qui permet de recalculer automatiquement les filtres de synthèse au décodeur. Selon l'invention, les propriétés statistiques du signal à l'entrée de la cellule à optimiser sont estimées à partir d'un masque de points. En l'absence de quantification, les filtres de synthèse peuvent alors être recalculés sur le signal reconstruit comme le montre la figure 5 où le même masque MQ de points que celui qui est employé pour le calcul des filtres d'analyse est utilisé, dans la mesure où il est possible de disposer déjà des points correspondants reconstruits. Pour cela, il est indispensable de placer le masque d'estimation correctement au niveau de l'analyse pour prendre en compte le retard apporté par le banc de filtres comme cela est représenté à la figure 6. Dans ces conditions, si en désignant par L le nombre de cellules du treillis des filtres utilisés dans le banc de décomposition et par M le nombre de niveaux sur la branche la plus découpée, le retard global apporté par le banc est donné par la relation :

$$D = \left(2^M - 1\right) x \left(2xL - 1\right)$$

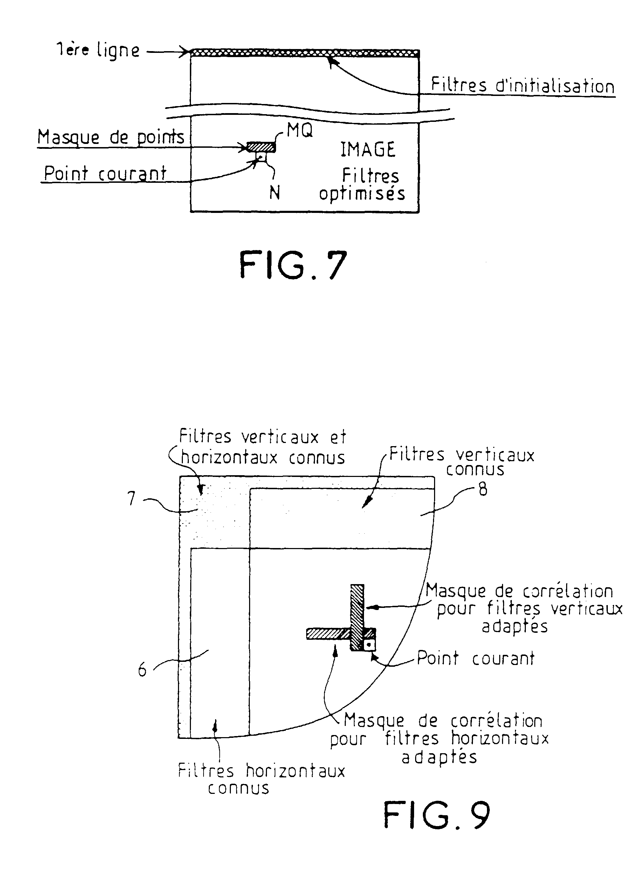

Comme ce retard peut devenir important lorsque la découpe en sous bande est profonde ou lorsque les longueurs des filtres augmentent, le masque des points nécessaire à l'estimation des statistiques pour l'optimisation des filtres, risque de se trouver éloigner du point à filtrer. Le retard D calculé précédemment correspond au retard maximum entre le point filtré et le masque d'estimation. Pour les niveaux intermédiaires dans l'arbre, ce retard est moindre. Afin de conserver à l'optimisation un caractère local, il est préférable de choisir, comme le montre la figure 7 d'extraire le masque MQ des lignes ou des colonnes précédentes situées au dessus, à gauche du point courant N à filtrer.

Il est à noter que tant que les points du masque d'estimation ne sont pas disponibles à l'analyse, c'est-à-dire à l'initialisation à cause du retard apporté par le banc de filtres, un jeu de filtres déterminé a priori et connus du codeur et du décodeur doit être utilisé.

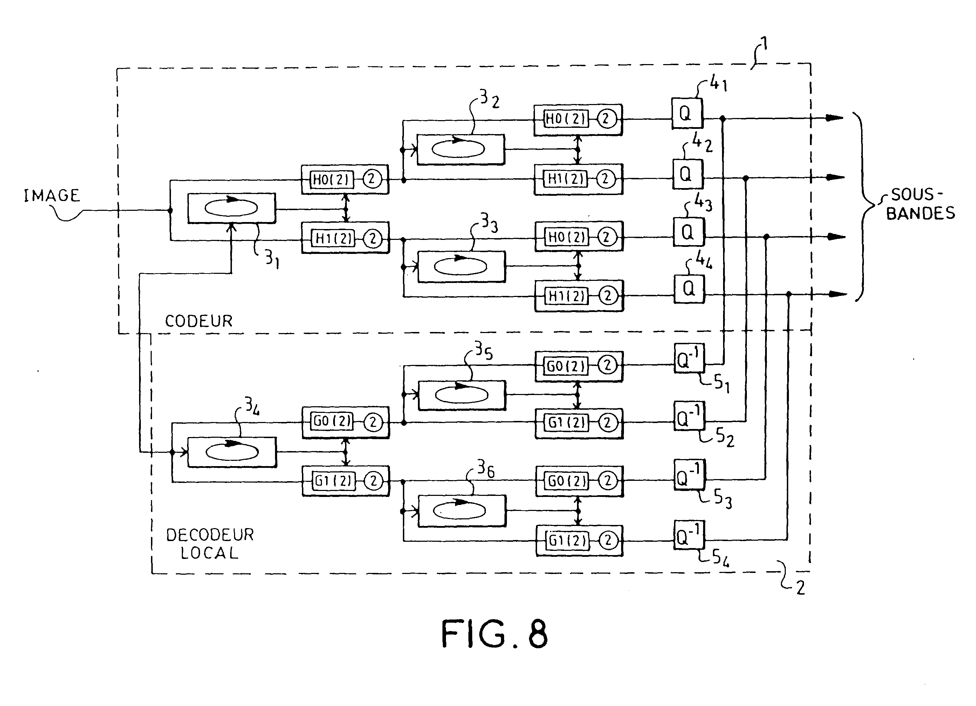

En présence de quantification le produit des matrices de transfert $E_i$ et $F_i$ de chaque couple de cellules d'analyse et de synthèse doit vérifier constamment l'identité, toute erreur sur l'un des coefficients d'une des deux cellules entraînant nécessairement une erreur de reconstruction sur le signal. Du fait que les structures en treillis sont très sensibles à ces erreurs et que, lorsque les signaux sous bande sont quantifiés les filtres de synthèse sont recalculés sur le signal reconstruit à partir des signaux quantifiés, le produit des matrices $E_i$ et $F_i$ ne peut plus respecter l'identité. Dans ces conditions une dérive au niveau du recalcul des filtres de synthèse due à l'erreur de quantification apparaît. Pour éviter ce phénomène, les filtres d'analyse et de synthèse sont calculés selon l'invention sur le même signal puisque le masque de points nécessaire au calcul des filtres d'analyse est extrait, comme le montre la figure 8, du signal reconstruit localement au codeur.

A cette fin, il est adjoint aux filtres $H_0(z)$ $H_1(z)$ de l'arbre de décomposition en sous bande du codeur, représenté à l'intérieur d'une ligne fermée en pointillé 1 sur la figure 8, un arbre de reconstruction composé des filtres de synthèse $G_0(z)$ et $G_1(z)$ représentés également à l'intérieur d'une ligne fermée en pointillé 2 formant un décodeur local. Les coefficients des filtres sont calculés par un ou plusieurs microprocesseurs $3_1$ ... $3_6$ recevant le signal appliqué à chaque entrée des filtres. Les processeurs correspondant sont programmés pour effectuer le calcul des coefficients selon le critère d'optimisation défini par la relation (3). L'arbre de décomposition de la figure 8 convient pour un filtrage adaptatif d'un signal de télévision par exemple à 4 sous bandes. En vue de la transmission des signaux sous bandes des quantificateurs $4_1$ à $4_4$ sont placés à la sortie des bancs de filtres pour quantifier chaque sous bande.

Des circuits de déquantification $5_1$ à $5_4$ correspondants sont placés aux entrées des bancs de filtres de l'arbre de reconstruction du décodeur local 2.

Il est à noter que le masque de points doit impérativement être extrait dans l'environnement causal du point à filtrer tant au codeur qu'au décodeur. D'autre part, certaines parties de l'image doivent être filtrées avec des filtres connus du codeur 1 et du décodeur 2 pour les traitements à l'initialisation et sur le bord supérieur et le bord gauche de l'image. Dans le cas de l'implantation à 4 sous bandes selon la figure 8 cela se traduit sur la figure 9 par l'apparition de zones 6, 7 et 8. En utilisant des filtres CQF le traitement des bords pourra être effectué de façon connue par périodisation circulaire.

Naturellement, l'invention n'est pas limitée aux exemples décrits, d'autres modes de réalisation sont également envisageables consistant par exemple à regrouper dans un seul et même processeur les calculs nécessaires à l'optimisation des filtres.

## Revendications

1. Procédé d'analyse et de synthèse en sous-bandes adaptatif pour codeur (1) et décodeur (2) d'images reliés par un canal de transmission du type consistant au niveau des filtres d'analyse à découper le signal à transmettre sur le canal de transmission en sous-bandes suivant une structure arborescente par filtrage et décimation, caractérisé en ce qu'il consiste à effectuer, pour chaque sous-bande, dans les filtres d'analyse, un filtrage adaptatif local prenant en compte le voisinage d'un point courant de l'image.

2. Procédé selon la revendication 1 caractérisé en ce qu'il consiste pour effectuer le filtrage adaptatif local dans chaque sous bande à calculer les coefficients des filtres d'analyse ($H_0$, $H_1$) à partir de signaux sous bande quantifiés ($4_1$ ... $4_4$) et reconstruits localement (2) au niveau du codeur.

3. Procédé selon l'une quelconque des revendications 1 et 2 caractérisé en ce qu'il consiste à calculer pour chaque point courant (N) de l'image et dans chaque sous bande les coefficients des filtres d'analyse de synthèse à partir d'un nombre déterminé de points précédents reconstruits dans le codeur d'analyse.

4. Procédé selon la revendication 3 caractérisé en ce que les points dudit nombre déterminé de points reconstruits sont situés sur la même ligne que le point courant (N).

5. Procédé selon les revendications 1 et 2 caractérisé en ce que un calcul des coefficients des filtres d'analyse et de synthèse est effectué à l'aide de masques (M) de points identiques, et en ce que le masque des filtres d'analyse se trouve décalé par rapport au point courant d'un retard D correspondant au retard apporté par le filtrage.

6. Procédé selon la revendication 5 caractérisé en ce que le masque (M) de points est extrait des lignes ou des colonnes qui précèdent la ligne ou la colonne du point courant (N) pour conserver à l'optimisation des filtres son caractère local.

7. Procédé selon la revendication 5 ou 6, caractérisé en ce qu'il consiste à utiliser un jeu de filtres prédéfinis du codeur et du décodeur lorsque le masque de points ne peut être constitué.

8. Procédé selon l'une quelconque des revendications 1 à 7 caractérisé en ce qu'il consiste à initialiser un calcul des filtres à partir du jeu de coefficients de filtre optimisés sur le point qui précède le point courant (N).

9. Procédé selon l'une quelconque des revendications 1 à 8 caractérisé en ce que, les filtres ayant une structure en treillis, il consiste à optimiser les filtres par la méthode de Newton en utilisant l'estimation des matrices de corrélation des signaux sous bandes obtenus par récurrence sur l'ordre du treillis à partir du signal appliqué à l'entrée du treillis.

10. Procédé selon l'une quelconque des revendications 1 à 9 caractérisé en ce qu'il consiste à effectuer le filtrage adaptatif dans chaque sous bande selon un critère tendant à minimiser le coût de codage en assurant l'indépendance et la blancheur des signaux sous bandes.

11. Procédé selon l'une quelconque des revendications 1 à 9, caractérisé en ce qu'il consiste à effectuer le filtrage adaptatif dans chaque sous-bande en fonction des propriétés statistiques spatiales locales de l'image.

12. Dispositif pour la mise en oeuvre du procédé selon l'une quelconque des revendications 1 à 11, comprenant un banc de décomposition en sous-bandes formé de filtres, les filtres servant à découper le signal d'image à transmettre sur un canal de transmission en sous-bandes suivant une structure arborescente par filtrage et décimation, les coefficients de chaque filtre sont calculés à partir de un ou plusieurs microprocesseurs $(3_1 ... 3_6)$, le ou les microprocesseurs recevant les signaux appliqués à l'entrée des filtres, le calcul des coefficients des filtres étant fonction d'un critère d'optimisation des filtres prenant en compte le voisinage du point courant filtré.

**Patentansprüche**

1. Verfahren zur adaptiven Subband-Analyse und -Synthese für einen Bild-Koder (1) und -Dekoder (2), die miteinander über einen Übertragungskanal von dem Typ verbunden sind, der bei den Analysefiltern das über den Übertragungskanal zu übertragende Signal durch Filterung und Dezimierung gemäß einer Baumstruktur aufteilt, dadurch gekennzeichnet, daß für jedes Subband in den Analysefiltern eine adaptive, lokale Filterung erfolgt, die die Nähe eines laufenden Pixels berücksichtigt.

2. Verfahren nach Anspruch 1, dadurch gekennzeichnet, daß die adaptive, lokale Filterung in jedem Subband durch Berechnung der Koeffizienten der Analysefilter ($H_0$, $H_1$) aus den quantisierten Subband-Signalen ($4_1 ... 4_4$) erfolgt und örtlich (2) beim Koder rekonstruiert wird.

3. Verfahren nach einem der Ansprüche 1 und 2, dadurch gekennzeichnet, daß für jedes laufende Pixel (N) und in jedem Subband die Berechnung der Koeffizienten der Anaysefilter der Synthese aus einer Zahl erfolgt, die durch die vorangehenden, in dem Analysekoder rekonstruierten Pixel bestimmt ist.

4. Verfahren nach Anspruch 3, dadurch gekennzeichnet, daß die Pixel der durch die rekonstruierten Pixel bestimmten Zahl in derselben Zeile wie das laufende Pixel (N) liegen.

5. Verfahren nach den Ansprüchen 1 und 2, dadurch gekennzeichnet, daß eine Berechnung der Koeffizienten der Analyse- und Synthesefilter mit identischen Punktmasken (M) erfolgt, und daß die Masken der Analysefilter gegenüber dem laufenden Pixel um eine Verzögerung D versetzt werden, die der Verzögerung durch die Filterung entspricht.

6. Verfahren nach Anspruch 5, dadurch gekennzeichnet, daß die Punktmaske (M) aus Zeilen oder Spalten extrahiert wird, die der Zeile oder der Spalte des laufenden Pixels (N) vorangehen, um die Optimierung der Filter in ihrer räumlichen Eigenschaft zu erhalten.

7. Verfahren nach Anspruch 5 oder 6, dadurch gekennzeichnet, daß ein Satz von vorbestimmten Filtern auf den Koder und den Dekoder angewendet wird, wenn die Punktmaske nicht gebildet werden kann.

8. Verfahren nach einem der Ansprüche 1 bis 7, dadurch gekennzeichnet, daß zur Auslösung einer Berechnung der Filter aus dem Satz der optimierten Filterkoeffizienten bei dem Pixel erfolgt, das dem laufenden Pixel (N) vorangeht.

9. Verfahren nach einem der Ansprüche 1 bis 8, dadurch gekennzeichnet, daß dann, wenn die Filter eine Gitterstruktur haben, die Filter durch das Verfahren von Newton unter Verwendung einer Schätzung der Korrelationsfaktoren der Subband-Signale optimiert werden, die durch das Wiederauftreten auf der Gitterordnung aus dem an den Eingang des Gitters angelegten Signal erhalten werden.

10. Verfahren nach einem der Ansprüche 1 bis 9, dadurch gekennzeichnet, daß die adaptive Filterung in jedem Subband gemäß einem Kriterium erfolgt, das die Kosten für die Kodierung minimiert, indem die Unabhängigkeit und die Weiße der Subband-Signale gewährleistet werden.

11. Verfahren nach einem der Ansprüche 1 bis 9, dadurch gekennzeichnet, daß die adaptive Filterung in jedem Subband als Funktion der statistischen, seitlichen, örtlichen Eigenschaften des Bildes erfolgt.

12. Vorrichtung zur Durchführung des Verfahrens nach einem der Ansprüche 1 bis 11 mit einer aus Filtern bestehenden Bank für die Zerlegung in Subbänder, wobei die Filter zur Aufteilung des über einen Übertragungskanal zu übertragenden Bildes in Subbänder gemäß einer Baumstruktur durch Filterung und Dezimierung dienen, dadurch gekennzeichnet, daß die Koeffizienten jedes Filters aus einem oder mehreren Mikroprozessoren ($3_1$, ... $3_6$) berechnet werden und der oder die Mikroprozessoren die an den Eingang der Filter angelegten Signale empfangen und die Berechnung der Filterkoeffizienten als Funktion eines Kriteriums zur Optimierung der Filter die Nähe des laufenden, gefilterten Pixels berücksichtigen.

## Claims

1. Adaptive process for sub-band analysis and synthesis for image coder (1) and decoder (2) linked by a transmission channel of the type consisting at the level of the analysis filters in partitioning the signal to be transmitted over the transmission channel into sub-bands according to a treelike structure by filtering and decimation, characterized in that it consists in performing, for each sub-band, in the analysis filters, a local adaptive filtering taking into account the neighbourhood of a current point of the image.

2. Process according to Claim 1, characterized in that, in order to perform the local adaptive filtering in each subband, it consists in calculating the coefficients of the analysis filters ($H_0$, $H_1$) on the basis of sub-band signals quantized ($4_1...4_4$) and reconstructed locally (2) at the level of the coder.

3. Process according to either one of Claims 1 and 2, characterized in that it consists in calculating for each current point (N) of the image and in each sub-band the coefficients of the analysis and synthesis filters on the basis of a specified number of previous points reconstructed in the analysis coder.

4. Process according to Claim 3, characterized in that the points of the said specified number of reconstructed points are situated on the same line as the current point (N).

5. Process according to Claims 1 and 2, characterized in that a calculation of the coefficients of the analysis and synthesis filters is performed with the aid of masks (M) of identical points, and in that the mask of the analysis filters is offset with respect to the current point by a delay D corresponding to the delay introduced by the filtering.

**6.** Process according to Claim 5, characterized in that the mask (M) of points is extracted from the lines or columns which precede the line or column of the current point (N) so that the optimization of the filters preserves its local character.

**7.** Process according to Claim 5 or 6, characterized in that it consists in using a set of predefined filters of the coder and of the decoder when the mask of points cannot be constructed.

**8.** Process according to any one of Claims 1 to 7, characterized in that it consists in initializing a calculation of the filters on the basis of the set of filter coefficients optimized over the point which precedes the current point (N).

**9.** Process according to any one of Claims 1 to 8, characterized in that, the filters having a trellis structure, it consists in optimizing the filters by Newton's method using the estimate of the correlation matrices of the sub-band signals obtained by recurrence on the order of the trellis on the basis of the signal applied to the input of the trellis.

**10.** Process according to any one of Claims 1 to 9, characterized in that it consists in performing the adaptive filtering in each sub-band according to a criterion tending to minimize the coding cost by ensuring the independence and whiteness of the sub-band signals.

**11.** Process according to any one of Claims 1 to 9, characterized in that it consists in performing the adaptive filtering in each sub-band as a function of the local spatial statistical properties of the image.

**12.** Device for implementing the process according to any one of Claims 1 to 11, comprising a sub-band splitting bank formed of filters, the filters serving to partition the image signal to be transmitted over a transmission channel into sub-bands according to a treelike structure by filtering and decimation, the device being characterized in that the coefficients of each filter are calculated on the basis of one or more microprocessors ($3_1...3_6$), the microprocessor or microprocessors receiving the signals applied to the input of the filters, the calculation of the coefficients of the filters being dependent on a criterion for optimizing the filters which takes account of the neighbourhood of the current filtered point.

## FIG.1

ART ANTERIEUR

## FIG.2

## FIG.3

Filtres initiaux H0/H1 ⋊ Filtres finaux H0'/H1'

Filtres initiaux G0/G1 {
X O X O
O X O X
}
Interpolation

Filtres transitoires G0''/G1'' {
X O X ●
O X ● X
}

Filtres finaux G0'/G1' {
X ● X ●
● X ● X
}

# FIG.4

Image sous-bande

Image reconstruite

↑2 → G0

↑2 → G1

MQ N

Masque

Retard dû au filtrage

Image sous-bande

# FIG.5

Image source

MQ

Retard

N

Masque

H0 → ↓2 →

H1 → ↓2 →

Image sous-bande

Image sous-bande

# FIG.6

1ère ligne

Filtres d'initialisation

Masque de points

MQ

IMAGE
Filtres
optimisés

Point courant

N

## FIG. 7

Filtres verticaux et
horizontaux connus

Filtres verticaux
connus

7

8

Masque de corrélation
pour filtres verticaux
adaptés

Point courant

6

Masque de corrélation
pour filtres horizontaux
adaptés

Filtres horizontaux
connus

## FIG. 9

FIG. 8